Europäisches Patentamt

European Patent Office

Office européen des brevets

(11) Publication number: **0 310 242 B1**

(12) **EUROPEAN PATENT SPECIFICATION**

(45) Date of publication of patent specification: **13.05.92**   (51) Int. Cl.⁵: **H01J 29/76**, H01J 29/51, H04N 3/22, H04N 9/28

(21) Application number: **88307969.1**

(22) Date of filing: **26.08.88**

(54) Colour display system including a self-converging deflection yoke providing raster distortion correction.

(30) Priority: **28.08.87 US 90629**
  **09.05.88 US 191470**

(43) Date of publication of application:
  **05.04.89 Bulletin  89/14**

(45) Publication of the grant of the patent:
  **13.05.92 Bulletin  92/20**

(84) Designated Contracting States:
  **DE ES FR GB IT SE**

(56) References cited:
  **GB-A- 2 140 200**
  **GB-A- 2 179 493**
  **US-A- 4 257 024**
  **US-A- 4 357 586**
  **US-A- 4 556 819**

(73) Proprietor: **RCA Thomson Licensing Corporation**
  **2 Independence Way**
  **Princeton New Jersey 08540(US)**

(72) Inventor: **Archer, John Richard**
  **2162 Braeburn East Drive**
  **Indianapolis Indiana(US)**
  Inventor: **Williams, Kevin Michael**
  **6101 N. Primrose Avenue**
  **Indianapolis Indiana(US)**

(74) Representative: **Pratt, Richard Wilson et al**
  **London Patent Operation G.E. TECHNICAL SERVICES CO. INC. Burdett House 15/16**
  **Buckingham Street**
  **London WC2N 6DU(GB)**

Rank Xerox (UK) Business Services
(3.08/2.19/2.0)

## Description

This invention relates to a color display system that includes a self-converging deflection yoke which also provides raster distortion correction.

In a conventional video apparatus, such as a color television receiver or a computer monitor, images are formed on a phosphor display screen of a cathode ray tube (CRT) by deflecting or scanning electron beams in a predetermined pattern across the CRT display screen while modulating the intensity of the electron beams in accordance with a video information signal. A color image is formed by the impinging upon or striking of particular color-producing phosphors of the display screen. In a typical arrangement, the CRT will produce three electron beams that are aligned in a plane parallel to the CRT display screen horizontal axis. Each of the beams is designated to strike phosphor elements of one particular color-producing type. The deflection yoke, which provides the electromagnetic field for deflecting or scanning the electron beams, is designed to substantially converge the three electron beams at all locations on the CRT display screen even though the three electron beams emanate from different locations within the electron gun assembly of the CRT. The line and field rate deflection coils of the yoke are wound to produce self-converging fields in accordance with conventional practice, known from aberration theory, for example. Such fields comprise a generally barrel-shaped vertical deflection field and a generally pincushion-shaped horizontal deflection field. Aberration theory teaches, however, that the deflection yoke coil winding distributions required for electron beam convergence may not correspond to the winding distributions needed to achieve correction of raster or pattern distortion, such as side pincushion distortion, for example. These relationships, and the physical limitations in coil winding techniques, may result in the necessity of compromise between convergence and pattern correction. It is a common practice to utilize dynamically energized electrical circuit means to achieve certain results, such as pincushion distortion correction, while lessening constraints on the coil winding distributions in order to more easily obtain the desired electron beam convergence requirements, for example. It is recognized in the prior art that side, or East-West (E-W), pincushion distortion may be reduced by producing a pincushion-shaped vertical deflection field at the beam exit, or funnel, end of the deflection yoke. Such a field may be produced by winding the vertical coil with a greater conductor winding angle at the entrance end of the coil and a lesser conductor winding angle at the exit end of the coil. Devices external to the yoke, such as magnets or field modifiers, for example, are also used to aid in achieving the desired performance. The cathode ray tube itself may also contribute to convergence or pattern distortion in either a positive or negative manner. It is therefore difficult to achieve the electron beam convergence and raster or pattern correction results desired in an efficient and economical manner. As the deflection angle of the picture tube is increased from 90° to 100° to 110°, the difficulty in providing self-convergence and static pincushion correction with no dynamically energized circuits increases dramatically. That is why no self-converged and static pincushion corrected systems for 110° deflection angle color picture tubes have been commercially available up to this time.

US-A-4 357 586 discloses a self-converging yoke having top- and bottom-pincushion-corrected saddle-type horizontal deflection coils and non-radial toroidally-wound vertical deflection coils for providing side pincushion correction. A pair of magnetically permeable field formers are mounted on either side of the yoke.

In accordance with the present invention, a self-converged and statically pincushion corrected color display system includes an electron gun assembly and a multi-color display screen included within a picture tube. A deflection yoke for the tube includes a core and horizontal and vertical deflection coils. The horizontal coils are of the self-converging type. The vertical coils are wound to produce some convergence correction and some side pincushion distortion correction. A first magnetically permeable member arrangement disposed at the beam exit region of the yoke provides some side pincushion distortion correction so that this distortion is substantially reduced. A second magnetically permeable member arrangement remote from the first provides additional convergence correction. A third magnetically permeable member arrangement associated with the electron gun assembly also provides convergence correction so that beam misconvergence is substantially reduced.

In the accompanying drawings,

FIGURE 1 is a block and schematic diagram of a portion of a display system in accordance with an aspect of the present invention;

FIGURE 2 is a side elevational view of the deflection yoke shown in FIGURE 1, partially in cross section, showing an aspect of the present invention;

FIGURE 3 is a front cross-sectional view of the cathode ray tube shown in FIGURE 1, illustrating an aspect of its construction as utilized with the invention;

FIGURE 4 is a front elevational view of the deflection yoke shown in FIGURE 1; and

FIGURE 5 is a schematic representation of the winding distribution of the vertical deflection coils of the yoke shown in FIGURE 1.

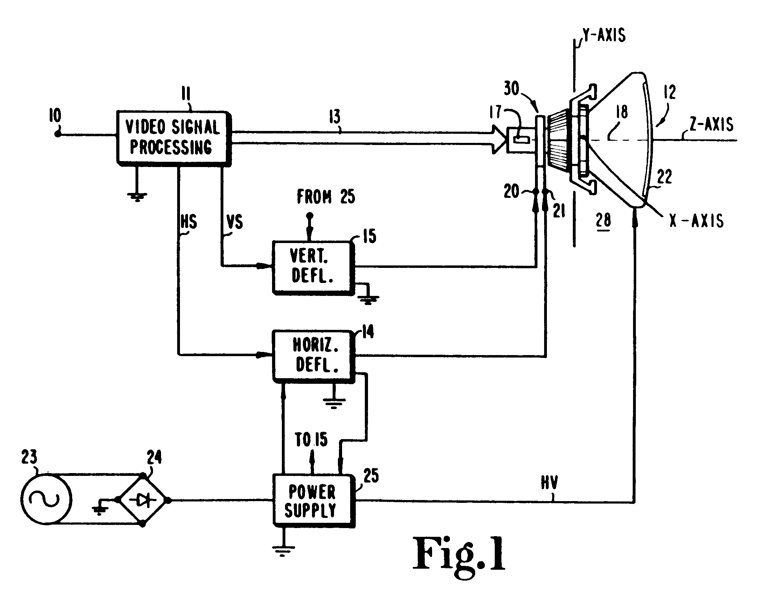

FIGURE 1 illustrates a video apparatus in which a video signal at a terminal 10 is applied to a video signal processing circuit 11. The video signal is provided from a source of video signals (not shown), such as a television receiver tuner or an external source, such as a video cassette recorder, for example. The video signal processing circuit 11 generates electron beam drive signals and applies them via a conductor 13 to the electron gun assembly 17 located within the neck region of a color cathode ray tube (CRT) 12 in order to modulate the intensity of the electron beams 18 produced by the electron gun assembly 17 in accordance with the information of the video signal. CRT 12 illustratively produces three electron beams having a horizontal in-line configuration.

Video signal processing circuit 11 also produces horizontal, or line-rate, and vertical, or field rate, synchronizing signals that are applied to horizontal deflection circuit 14 and vertical deflection circuit 15, respectively, along conductors designated HS and VS. Vertical deflection circuit 15 generates vertical deflection rate signals that are applied via a terminal 20 to the vertical or field-rate deflection coils of deflection yoke 30, located on CRT 12 in the vicinity of the CRT neck and funnel regions of the evacuated glass envelope of the tube in order to produce vertical deflection current in the deflection coils. Horizontal deflection circuit 14 generates horizontal deflection rate signals that are applied via a terminal 21 to the horizontal or line-rate deflection coils of yoke 30, in order to produce horizontal deflection current in the deflection coils. The combination of CRT 12 and yoke 30 form a color display system 28. The horizontal and vertical deflection currents flowing in yoke 30 produce electromagnetic fields that deflect or scan the electron beams 18 along the tube X and Y axes, respectively, to form a raster on the multi-color phosphor elements of a display screen 22 of CRT 12.

Power for the video apparatus is provided from an AC power source 23 which is connected to a rectifying circuit 24 that produces and applies an unregulated DC voltage to a power supply circuit 25. Power supply circuit 25, illustratively of the flyback type, includes regulating circuits which act to produce regulated voltage levels that are used to provide power to horizontal deflection circuit 14 and vertical deflection circuit 15, for example. Power supply 25 also supplies high voltage of the order of 25 kV along a conductor HV to the high voltage or ultor terminal of CRT 12.

The physical separation of the three electron beams 18 formed by electron gun assembly 17, as well as the geometry of the front panel of CRT 12, on which display screen 22 is formed, are factors which contribute to beam misconvergence and raster or pattern distortion errors. This distortion is referred to as top and bottom and side pincushion distortion. Aberration theory describes the nature of the line and field rate deflection fields necessary to achieve convergence of the electron beams at various locations on the CRT display screen 22, as well as correction of raster or pattern distortion, such as top and bottom (N-S) pincushion distortion or side (E-W) pincushion distortion.

Aberration theory of magnetic deflection can be used to analyze the approximate electron-optical performance of a yoke from its field distribution functions $H_0(z)$, the main component of the deflection field, and $H_2(z)$, representing the transverse nonuniformity of the field, which vary with position along the longitudinal or Z-axis of the yoke.

While all regions of the yoke fields affect convergence and pattern distortion, the effect of field changes in particular regions of the deflection fields may affect convergence, and particular raster distortions disaproportionately; that is, different portions and polarities of the $H_2$-functions contribute differently to the sensitivity of convergence and raster distortion errors. Three yoke field regions are defined: The entrance region extends from an area around the exit of the electron gun assembly to the vicinity of the entrance area of the horizontal coils of the deflection yoke. The exit region extends from the vicinity of the exit area of the yoke core to the CRT display screen. The mid region is bounded by the entrance and exit areas. Analysis indicates that pincushion distortion is determined mainly by the behavior of the $H_2$-functions in the exit region and, to a smaller extent, in the mid region. Astigmatism required for self-convergence is determined by portions of the $H_2$-functions in the mid and exit regions of the yoke. Coma, one form of misconvergence usually specifically referred to, is determined mainly by the behavior of the $H_2$-functions in the entrance region and, to a smaller extent, in the mid region. Convergence sensitivity to misalignment is determined by the behavior of the $H_2$-functions in the entrance and mid regions.

The nature and polarity of the $H_2$ or nonuniformity functions at the previously described locations determines the effect on convergence and raster distortion. For example, it is known that the horizontal deflection field must have an overall net pincushion shape or nonuniformity function, and the vertical deflection field must have an overall net barrel shape or nonuniformity function in order to achieve beam convergence. However, the field nonuniformity required for beam convergence may either reduce or aggravate certain misconvergence or raster distortion conditions at particular locations along the yoke longitudinal axis. These conditions are observed on the display screen. Vertical coma error of the type wherein the center beam raster is reduced in height with respect to the outer beam rasters may be corrected by a pincushion shaped vertical deflection field near the entrance region of the yoke. Similarly, side pincushion raster distortion may be corrected by a pincushion shaped vertical deflection field near the exit region of the yoke. These pincushion-shaped correcting fields are in opposition to the barrel-shaped vertical deflection field nonuniformity needed for convergence of the electron beams, as previously described. A solution in accordance with an aspect of the invention is to make the correcting field nonuniformity sufficiently localized so that the desired correction takes place while retaining the overall net nonuniformity of the deflection field needed for electron beam convergence, by appropriate selection and placement of various field forming elements, so that their combined result is a self-converged and statically pincushion distortion corrected color display system.

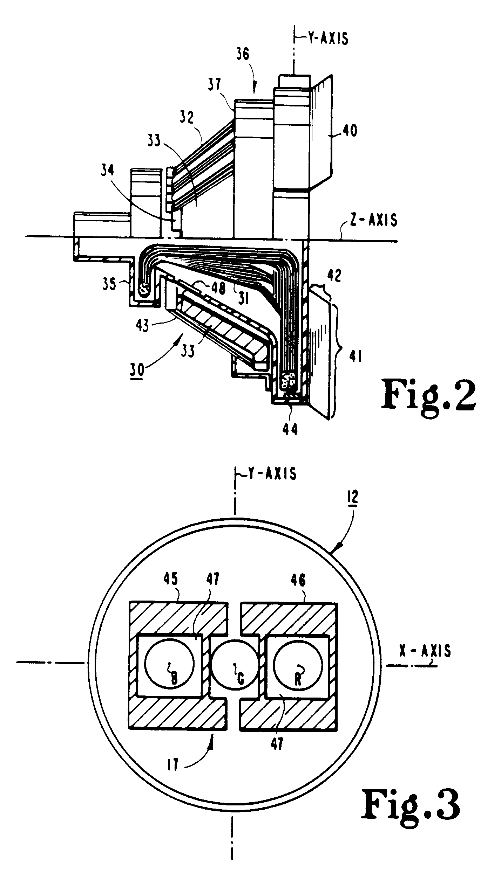

In accordance with an aspect of the present invention, the video apparatus of FIGURE 1 incorporates a display system 28 that provides desired convergence of the three electron beams at all locations on the CRT display screen 22 as well as correction of substantially all raster pattern distortion, otherwise introduced by the physical construction of the display system, without the need for electrical circuitry within the video apparatus to assist in such convergence and correction. FIGURE 2 illustrates, in greater detail, deflection yoke 30, which comprises saddle-type line or horizontal rate deflection coils 31, and field or vertical rate deflection coils 32 toroidally wound about a magnetically permeable core 33. Front and rear core end rings, of which rear end ring 34 is shown, may be used to permit vertical deflection coils 32 to be wound having a biased configuration for producing a pincushion-shaped vertical deflection field at the beam exit end of the yoke. Plastic insulator or liner 35 physically separates and provides support for horizontal and vertical coils 31 and 32.

Display system 28 is designed to provide substantially all pattern or raster distortion correction of the raster formed on display screen 22 of CRT 12 as well as self-convergence. In order to accomplish this performance, yoke 30 utilizes the particular winding configuration of the previously described biased-wound vertical deflection coils 31 and the horizontal deflection coils 32. Yoke 30 also incorporates field forming cross-arm structures 36, located near the front or electron beam exit end of yoke 30. Field formers 36, made of magnetically permeable material, provide a low reluctance path for the stray or external electromagnetic field produced by the toroidally wound vertical deflection coils 32. Vertical field flux is collected by element 37 of field formers 36, from which it is channeled to field forming feet 40. The length or arcuate dimension 41 of feet 40 is much larger, of the order of at least five times larger, than the Z axis dimension projected onto the central longitudinal axis Z of the yoke, dimension 42. The electromagnetic field formed between horizontally adjacent feet contributes to the primary field produced by vertical deflection coils 32.

Field forming feet 40 form a pincushion-shaped field in a region between the exit end of the yoke, including permeable core 33 and the display screen 22. Unfortunately, electromagnetic fields in this region can adversely affect purity by causing the respective beams to excite other than their respective color phosphors on the display screen. To minimize this effect, the Z axis dimension of the field forming feet is kept small relative to their circumferential distance. At the same time, the relatively small Z axis dimension of the feet does not provide sufficient pincushion field at the exit end of the yoke to provide all of the required side pincushion distortion correction. Therefore, in accordance with a feature of the invention, the vertical deflection coils are selected for producing a pincushion-shaped field near the beam exit region of yoke 30 of such an amount that, in conjunction with the pincushion field produced by field forming feet 40, side pincushion distortion is substantially eliminated while still maintaining purity. The amount of biasing of the conductors of the vertical coils so that they no longer lie in radial planes passing through the Z axis of the yoke produces and controls the amount of pincushion field produced at the exit end of the yoke.

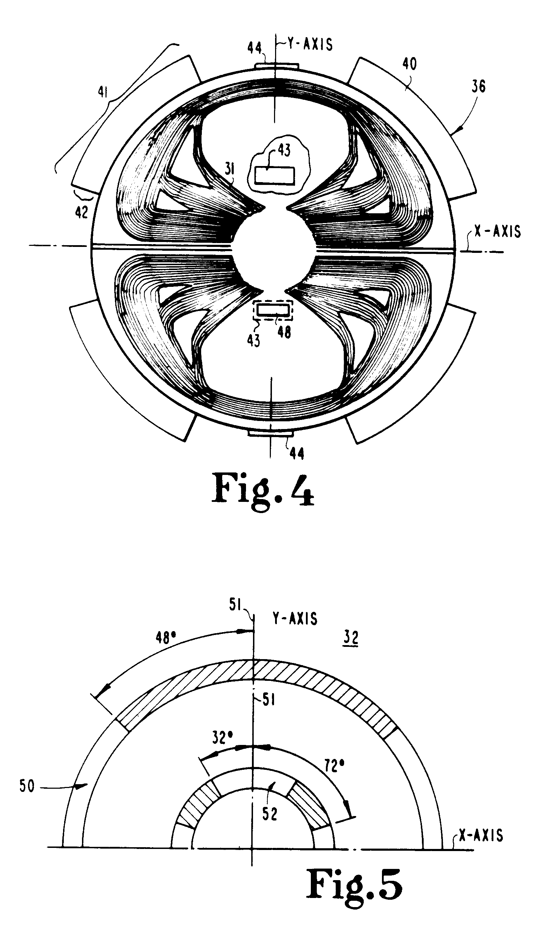

FIGURE 5 schematically illustrates the winding angle of the vertical deflection coils 32 at the front end 50 of coil 32 being of the order of 48° from the vertical centerline 51, and the winding angle at the rear end 52 of coil 32 being within the region defined between the angles of 32° and 72° from vertical centerline 51.

The bias wound vertical deflection coils produce a pincushion-shaped field component which is not what is needed for convergence correction. What is desired for convergence correction, insofar as the vertical deflection coil contribution is concerned, is a predominantly barrel-shaped field. To shape the vertical field to a suitable barrel-shaped field within the central region of the yoke, shunt members 43 are utilized. These field forming members are disposed at the 12 and 6 o'clock positions in the central region of the yoke. In this embodiment, members 43 are located at a position between the entrance of the yoke and the center of the yoke, as illustrated in FIGURES 2 and 4. Members 43 are mounted in a recess in yoke liner 35 behind magnets 48, which will be described subsequently. Members 43 are rectangular and made of a magnetically permeable material such as silicon steel. Their dimensions are, in this embodiment, 1.35 cm in length in the Z axis direction and 2.38 cm in width. Members 43 provide a relatively low reluctance path for the magnetic flux of the vertical field and hence enhance the barrel shape of the vertical field at the entrance and mid regions of the yoke. Thus, the vertical deflection field at the entrance and mid regions of the yoke, as aided by the field forming provided by members 43, combine to correct convergence on the 12-6 o'clock vertical axis and in the corners. These are the convergence conditions observed primarily at the top and bottom portions of the display screen.

The achievement of the pincushion distortion and beam misconvergence corrections, as described according to aspects of the invention up to now, results in a coma error which must also be corrected. By design choice in practicing the invention of the illustrated embodiment, the purity, pincushion and convergence errors are corrected at the expense of coma. The constraints of correcting these errors in large screen (26V) 110° deflection angle color picture tubes requires extremely careful compromises, which can optimize the correction of many parameters at the expense of the fewest possible other parameters. Coma is corrected in the following manner. Referring to FIGURE 3, vertical coma correction is effected by magnetically permeable coma correction third members or shunts 45 and 46 located within electron gun assembly 17 near the electron beam exit end. Shunts 45 and 46 surround the outer beam apertures through which the red and blue representative electron beams pass, identified as B and R in FIGURE 3, but do not surround the center (green) beam aperture, designated G in FIGURE 3. In the configuration shown in FIGURE 3, each of shunts 45 and 46 is a flat plate having a square aperture 47. Two of the sides of aperture 47 are parallel to the inline or X-AXIS direction of the three electron beams. The other two sides of aperture 47 are perpendicular to the inline direction, and are aligned with the Y-AXIS direction. Each of shunts 45 and 46 is longer in the Y-AXIS direction than in the X-AXIS direction, and is symmetrical about its horizontal axis. The aperture 47 may also comprise a rectangular or circular shape. The overall size, shape and thickness of shunts 45 and 46 may be adjusted to provide the necessary amount of coma correction.

More details of the coma correction structure within the electron gun structure is disclosed in U.S. Patent No. 4,730,144 issued 8 March 1988 to Ingle et al., and entitled COLOR PICTURE TUBE HAVING INLINE ELECTRON GUN WITH COMA CORRECTION MEMBERS.

FIGURE 4 is a front view of deflection yoke 30, illustrating the segmented winding arrangement of horizontal deflection coils 31, used to provide greater control over the performance of the coils. Field forming elements or feet 40 of field formers 36 are also clearly shown, as are magnets 44 and 48.

Referring again to FIGURES 2 and 4, magnet pairs 44 and 48 cooperate to correct top and bottom pincushion distortion. Magnets 44 are disposed about the vertical axis of the yoke at the beam exit end. The respective magnets are poled the same as the respective top and bottom vertical deflection fields. Magnets 44 create a local pincushion field which acts to reduce top and bottom pincushion distortion. However, the pincushion field is not desired for the convergence characteristic of the vertical deflection coil. To offset the effect of magnets 44, magnets 48 are disposed on the vertical axis at a location similar to permeable tabs 43 already described. Magnets 48 are poled opposite to magnets 44 and their field effect is to reduce the pincushion effect of magnets 44 so as to restore the barrel field effect of the vertical deflection coil to maintain beam convergence. Thus, magnet pairs 44 and 48 cooperate to reduce top and bottom pincushion distortion while maintaining beam convergence.

It is noted that magnets 44 are selected to be of minimum strength to correct the top and bottom pincushion distortion. In this embodiment for a 26V 110° picture tube, the strength of magnets 44 is held to no more than 15 gauss. This is to minimize misregister of the beams which, if allowed to depart significantly, would adversely affect purity.

Each of the described elements are selected to have minimum effect on purity, and to cooperate with each other as described to correct the described conditions of pincushion distortion, misconvergence, trap (corner misconvergence of horizontal lines) and coma.

**Claims**

1. A self-converged and statically pincushion distortion corrected, that is wherein the pincushion distorsion is corrected without dynamically energized circuits, color display system, comprising:

a cathode ray tube comprising an evacuated glass envelope and including an array of different color representative phosphor elements disposed at one end portion of said envelope forming a display screen, and an electron gun assembly disposed at a second end portion of said envelope, said electron gun assembly selected for producing three horizontal in-line electron beams for respectively energizing respective ones of said different color phosphor elements; wherein

a deflection yoke arrangement includes:
a magnetically permeable core;
horizontal and vertical deflection coils disposed in operating relationship relative to said core for producing, when energized, horizontal and vertical deflection fields for causing said beams to scan rasters on said display screen, the conductor winding distribution of said horizontal deflection coils being selected for producing a predominantly pincushion- shaped field for effecting beam convergence along horizontal lines on said display screen;
first magnetically permeable field former means disposed near the beam exit end of said yoke for enhancing a pincushion-shaped portion of said vertical deflection field for correcting a first amount of side pincushion distortion;
the conductor winding distribution of said vertical deflection coils being selected for:

1) producing a pincushion shaped vertical deflection field in a first region of said yoke near said beam exit end of said yoke for correcting a second amount of said side pincushion distortion such that in conjunction with said first magnetically permeable field former means said side pincushion distortion is substantially completely corrected; and

2) producing a barrel shaped vertical deflection field in a second region of said deflection yoke remote from said beam exit end and in a direction toward the beam entrance end of said yoke for correcting a first amount of misconvergence associated with top and bottom portions of said display screen;

second magnetically permeable field former means disposed in said second region of said yoke for enhancing said barrel shaped vertical deflection field for correcting a second amount of said misconvergence associated with said top and bottom portions of said display screen; and

third magnetically permeable field former means associated with said electron gun assembly for correcting a third amount of said misconvergence associated with said top and bottom portions of said display screen such that said barrel shaped vertical deflection field, said second and said third magnetically permeable field former means cooperate to substantially correct said misconvergence associated with said top and bottom portions of said display screen.

2. A self-converged and statically pincushion distortion corrected color display system according to Claim 1 wherein said first magnetically permeable field former means comprises a pair of members symmetrically disposed on opposite sides of the vertical deflection axis, each member comprising a plurality of field forming feet members extending beyond said beam exit end of said yoke arrangement, each of said feet members having a circumferential dimension with respect to the central longitudinal axis of said yoke arrangement and a Z axis dimension extending outwardly from said beam exit end of said yoke arrangement and projected onto said central longitudinal axis of said yoke arrangement, the ratio of said circumferential dimension to said Z axis dimension of said feet members being greater than 5.

3. A self-converged and statically pincushion distortion corrected color display system according to Claim 2 wherein said ratio is greater than 8.

4. A self-converged and statically pincushion distortion corrected color display system according to Claim 1 wherein said third magnetically permeable field former means comprises a pair of magnetic shunts associated with the two outside ones of said three in-line electron beams, said shunts being longer in a direction perpendicular to said horizontal in-line beam axis than in a direction of said horizontal in-line beam axis.

5. A self-converged and statically pincushion distortion corrected color display system according to Claim 4 wherein said shunts respectively enclose the beam paths of said two outer ones of said three horizontal in-line beams.

6. A self-converged and statically pincushion distortion corrected color display system according to Claim 4 wherein each of said shunts comprise a flat plate.

7. A self-converged and statically pincushion distortion corrected color display system according to Claim 1 wherein said conductor winding distribution of said vertical deflection coils comprises a non-radial winding distribution wherein the winding angle of said conductors at the beam entrance end of said yoke arrangement is greater than the winding angle of said conductors at the beam exit end of said yoke arrangement.

## Revendications

**1.** Système d'affichage couleur à auto-convergence et à correction statique de distorsion en coussinet, c'est-à-dire dans lequel la distorsion en coussinet est corrigée sans circuit à excitation dynamique, comprenant :

un tube à rayons cathodiques comportant une enveloppe en verre mise sous vide et incluant un arrangement d'éléments luminophores représentant différentes couleurs, disposé sur une partie d'extrêmité de ladite enveloppe formant un écran de visualisation, et un système de canons électroniques disposés à une seconde partie d'extrêmité de ladite enveloppe, ledit système de canon électronique étant sélectionné de manière à produire trois faisceaux électroniques horizontaux en ligne pour exciter respectivement l'un, des éléments luminophores desdits éléments luminophores de couleurs différentes ; dans lequel

un système de collier de déviation comprend :

un noyau magnétiquement perméable ; des bobines de déviation horizontale et verticale disposées en relation de fonctionnement par rapport audit noyau pour produire, lorsqu'elles sont excitées, des champs de déviation horizontale et verticale pour provoquer le balayage de trames par lesdits faisceaux sur ledit écran de visualisation, la distribution d'enroulement conducteur desdites bobines de déviation horizontale étant choisie de manière à produire un champ en forme prédominante de coussinet pour réaliser une convergence de faisceaux le long de lignes horizontales sur ledit écran de visualisation ;

des premiers moyens de formation d'un champ magnétiquement perméable disposés près de l'extrémité de sortie de faisceaux dudit collier pour renforcer une portion en forme de coussinet dudit champ de déviation verticale afin de corriger une première quantité de la distorsion en coussinet latéral ;

la distribution d'enroulement conducteur desdites bobines de déviation verticale étant choisie pour :

1. Produire un champ de déviation verticale en forme de coussinet dans une première région dudit collier proche de ladite extrêmité de sortie de faisceaux dudit collier pour corriger une seconde quantité de ladite distorsion en coussinet latéral de manière que, en liaison avec les premiers moyens de formation d'un champ magnétiquement perméable cette distorsion en coussinet latéral soit sensiblement totalement corrigée ; et

2. Produire un champ de déviation verticale en forme de barillet dans une seconde région dudit collier de déviation éloignée de ladite extrêmité de sortie de faisceaux et dans une direction orientée vers l'extrêmité d'entrée de faisceaux dudit collier afin de corriger une première quantité de défaut de convergence associée aux parties supérieure et inférieure de l'écran de visualisation ;

des seconds moyens de formation de champ magnétiquement perméable disposés dans ladite seconde région dudit collier pour renforcer ledit champ de déviation verticale en forme de barillet afin de corriger une seconde quantité dudit défaut de convergence associée avec lesdites portions supérieure et inférieure dudit écran de visualisation et

des troisièmes moyens de formation de champ magnétiquement perméable, associés audit système de canons électroniques pour corriger une troisième quantité dudit défaut de convergence associée auxdites portions supérieure et inférieure de l'écran de visualisation de manière que ledit champ de déviation verticale en forme de barillet, lesdits seconds et troisièmes moyens de formation de champ magnétiquement perméable coopèrent afin de corriger sensiblement ledit défaut de convergence associé auxdites portions supérieure et inférieure dudit écran de visualisation.

**2.** Système d'affichage couleur à auto-convergence et à correction statique de distorsion en coussinet selon la revendication 1 selon lequel lesdits premiers moyens de formation de champ magnétiquement perméable comprennent une paire d'éléments disposés symétriquement sur des côtés opposés de l'axe de déviation verticale, chaque élément comprenant une pluralité d'éléments en forme de pied de formation de champ s'étendant au-delà de ladite extrêmité de sortie de faisceaux dudit système de collier, chacun desdits éléments en forme de pied ayant une dimension circonférentielle par rapport à l'axe longitudinal central dudit système de collier et une dimension selon l'axe Z s'étendant vers l'extérieur à partir de ladite extrêmité de sortie de faisceaux dudit système de collier et se projetant sur ledit axe longitudinal central dudit système de collier, le rapport de ladite dimension circonférentielle à la dimension selon l'axe Z desdits éléments en forme de pied étant supérieur à 5.

3. Système d'affichage couleur à auto-convergence et à correction statique de distorsion en coussinet selon la revendication 2 dans lequel ledit rapport est supérieur à 8.

4. Système d'affichage couleur à auto-convergence et à correction statique de distorsion en coussinet selon la revendication 1 dans lequel lesdits troisièmes moyens de formation de champ magnétiquement perméable comprennent une paire de shunts magnétiques associés chacun à l'un des faisceaux extérieurs desdits trois faisceaux électroniques en ligne, lesdits shunts étant plus importants dans une direction perpendiculaire audit axe de faisceau horizontal en ligne que dans une direction dudit axe de faisceau horizontal en ligne.

5. Système d'affichage couleur à auto-convergence et à correction statique de distorsion en coussinet selon la revendication 4 dans lequel lesdits shunts englobent respectivement les trajectoires de faisceaux des deux faisceaux extérieurs desdits trois faisceaux horizontaux en ligne.

6. Système d'affichage couleur à auto-convergence et à correction statique de distorsion en coussinet selon la revendication 4 dans lequel chacun des shunts comprend une plaque plane.

7. Système d'affichage couleur à auto-convergence et à correction statique de distorsion en coussinet selon la revendication 1 dans lequel ladite distribution d'enroulement conducteur desdites bobines de déviation verticale comprend une distribution d'enroulement non radiale dans laquelle l'angle d'enroulement desdits conducteurs à l'extrêmité d'entrée de faisceau dudit système de collier est supérieur à l'angle d'enroulement desdits conducteurs à l'extrêmité de sortie dudit système de collier.

**Patentansprüche**

1. Selbstkonvergiertes und statisch kissenverzeichnungskorrigiertes, d.h. in welchem die Kissenverzeichnung ohne dynamisch erregte Schaltungen korrigiert wird, Farbanzeigesystem, mit:
einer Kathodenstrahlröhre mit einem evakuierten Glaskörper und einer Anordnung verschiedene Farben repräsentierender Phosphorelemente, die an einem Endteil des Körpers angeordnet sind und einen Anzeigeschirm bilden, und einer Elektronenstrahler-Anordnung, die an einem zweiten Endteil des Körpers angeordnet ist, wobei die Elektronenstrahler-Anordnung derart gewählt ist, daß sie drei horizontale "In-Line"-Elektronenstrahlen erzeugt, die jeweilige der verschiedenfarbigen Phosphorelemente erregen; wobei
eine Ablenkjoch-Anordnung das folgende umfaßt:
einen magnetisch permeablen Kern;
horizontale und vertikale Ablenkspulen, die derart in einem Betriebsverhältnis relativ zu dem Kern angeordnet sind, daß sie bei Erregung horizontale und vertikale Ablenkfelder erzeugen, die bewirken, daß die Strahlen Raster auf dem Anzeigeschirm abtasten, wobei die Leiterwindungsverteilung der horizontalen Ablenkspulen so gewählt ist, daß ein im wesentlichen kissenförmiges Feld erzeugt wird, uni eine Strahlenkonvergenz entlang horizontaler Linien auf dem Anzeigeschirm zu bewirken;
erste magnetisch permeablen Feldformungs-Mittel, die nahe dem Strahlenaustrittsende des Jochs angeordnet sind, zum Verstärken eines kissenförmigen Teils des vertikalen Ablenkfeldes zum Korrigieren eines ersten Ausmaßes an seitlicher Kissenverzeichnung;
wobei die Leiterwicklungsverteilung der vertikalen Ablenkspulen so gewählt ist, daß:
1) ein kissenförmiges vertikales Ablenkfeld in einem ersten Bereich des Jochs nahe dem Strahlaustrittsende des Jochs erzeugt wird, zum Korrigieren eines zweiten Ausmaßes der seitlichen Kissenverzeichnung derart, daß in Verbindung mit den ersten magnetisch permeablen Feldformungs-Mitteln die seitliche Kissenverzeichnung im wesentlichen vollständig korrigiert wird; und
2) ein tonnenförmiges vertikales Ablenkfeld in einem zweiten Bereich des Ablenkjochs, entfernt von dem Strahlaustrittsende und in Richtung auf das Strahleintrittsende des Jochs gelegen, erzeugt wird, zum Korrigieren eines ersten Ausmaßes an Fehlkonvergenz an oberen und unteren Bereichen des Anzeigeschirms;
zweite magnetisch permeable Feldformungs-Mittel, die in dem zweiten Bereich des Jochs angeordnet sind, zum Verstärken des tonnenförmigen vertikalen Ablenkfeldes zum Korrigieren eines zweiten Ausmaßes der Fehlkonvergenz in den oberen und unteren Bereichen des Anzeigeschirms; und
der Elektronenstrahler-Anordnung zugehörige dritte magnetisch permeable Feldformungs-Mittel zum Korigieren eines dritten Ausmaßes der Fehlkonvergenz in den oberen und unteren Bereichen des Anzeigeschirms derart, daß das tonnenförmige vertikale Ablenkfeld, die zweiten und die dritten magnetisch permeablen Feldformungs-Mittel derart zusammenwirken, daß die Fehlkonvergenz in den oberen und unteren Bereichen des Anzeigeschirms im wesentlichen korrigiert wird.

2. Selbstkonvergiertes und statisch kissenverzeichnungskorrigiertes Farbanzeigesystem gemäß Anspruch 1, wobei die ersten magnetisch permeablen Feldformungs-Mittel ein Paar von Teilen umfassen, die symmetrisch an einander gegenüberliegenden Seiten der vertikalen Ablenkachse angeordnet sind, wobei jedes Teil eine Mehrzahl von Feldformungs-Fußteilen enthält, die sich bis über das Strahlaustrittsende der Jochanordnung hinaus erstrecken, wobei jedes dieser Fußteile eine Umfangs-Dimension in bezug auf die mittlere Längsachse der Jochanordnung und eine sich von dem Strahlaustrittsende der Jochanordnung nach auswärts erstreckende und auf die mittlere Längsachse der Jochanordnung verlängerte Z-Achsen-Dimension aufweist, wobei das Verhältnis der Umfangs-Dimension zu der Z-Achsen-Dimension der Fußteile größer als 5 ist.

3. Selbstkonvergiertes und statisch kissenverzeichnungskorrigiertes Farbanzeigesystem gemäß Anspruch 2, wobei das Verhältnis größer als 8 ist.

4. Selbstkonvergiertes und statisch kissenverzeichnungskorrigiertes Farbanzeigesystem gemäß Anspruch 1, wobei die dritten magnetisch permeablen Feldformungs-Mittel ein Paar den beiden äußeren der drei In-Line-Elektronenstrahlen zugehörige magnetische Nebenschlußleitungen (Shunts) umfassen, wobei die Shunts in Querrichtung zu der horizontalen In-Line-Strahlachse länger sind als in Richtung der horizontalen In-Line-Strahlachse.

5. Selbstkonvergiertes und statisch kissenverzeichnungskorrigiertes Farbanzeigesystem gemäß Anspruch 4, wobei die Shunts jeweils die Strahlstrecken der beiden äußeren der drei horizontalen In-Line-Strahlen umschließen.

6. Selbstkonvergiertes und statisch kissenverzeichnungskorrigiertes Farbanzeigesystem gemäß Anspruch 4, wobei jeder der Shunts eine flache Scheibe umfaßt.

7. Selbstkonvergiertes und statisch kissenverzeichnungskorrigiertes Farbanzeigesystem gemäß Anspruch 1, wobei die Leiterwicklungsverteilung der vertikalen Ablenkspulen eine nichtradiale Windungsverteilung umfaßt, wobei der Windungswinkel der Leiter am Strahleintrittsende der Jochanordnung größer als der Wicklungswinkel der Leiter am Strahlaustrittsende der Jochanordnung ist.

Fig.1

Y-AXIS

36

37

32

33

40

34

Z-AXIS

35

42

48   31

43

30   33

41

44

**Fig.2**

Y-AXIS

12

45   47   46

X-AXIS

B   G   R

17   47

**Fig.3**

Fig.4

Fig.5